# EUROPÄISCHE PATENTANMELDUNG

(11) **EP 3 239 110 A1**
(43) Veröffentlichungstag der Anmeldung: **01.11.2017**
(21) Anmeldenummer: 17157155.7
(22) Anmeldetag: 21.02.2017
(51) Int. Cl.: C03B 5/16, C03B 5/027, C03B 5/187, C03B 5/24, C03B 5/167, H05B 7/144

(54) **VORRICHTUNG UND VERFAHREN ZUR HERSTELLUNG VON GLASPRODUKTEN AUS EINER GLASSCHMELZE UNTER VERMEIDUNG VON BLASENBILDUNG**

(30) Priorität: 25.04.2016 DE 102016107577
(71) Anmelder: Schott AG, 55122 Mainz (DE)
(72) Erfinder: Duch, Klaus-Dieter, 65232 Taunusstein (DE); Claußen, Olaf, 55278 Undenheim (DE); Pfeiffer, Thomas, 55218 Ingelheim (DE); Weidmann, Günter, 55237 Flonheim (DE); Wurm, Reinhard, 95692 Konnersreuth (DE)
(74) Vertreter: 2K Patentanwälte Blasberg Kewitz & Reichel

(57) **Zusammenfassung**

Es werden eine Vorrichtung und ein Verfahren zur Herstellung von Glasprodukten aus einer Glasschmelze unter Vermeidung von Blasenbildung offenbart, wobei die Vorrichtung (100) einen Tiegel, wie z.B. einen Rührtiegel (110), und ein darin befindliches Bauteil, wie z.B. ein drehbeweglich montiertes Rührorgan (120), zur Verarbeitung der Glasschmelze (G) aufweist, und wobei die Vorrichtung (100) zum Heizen der Glasschmelze (G) ein Wechselstromaggregat (150) aufweist, das den Tiegel bzw. Rührtiegel (110) über Stromanschlusselemente (111; 112) bestromt. Das Bauteil bzw. Rührorgan (120) wird über eine Stromdrossel (160) mit veränderbarer Impedanz mit einem der Stromanschlusselemente, insbesondere mit einem unteren Heizflansch (112), des Tiegels bzw. Rührtiegels (110) verbunden. Die Impedanz (Z_{D}) der Stromdrossel (160) wird so eingestellt, dass eine in der Glasschmelze (G), insbesondere an Enden von Rührerflügeln, sich ausbildende Wechselstromdichte (I) zwischen einem unteren Grenzwert (Imin) und einem oberen Grenzwert (Imax) liegt. Denn die Erfindung liegt die Erkenntnis zu Grunde, dass mit Hilfe einer solchen Stromdrossel durch Einstellen der Impedanz erreicht werden kann, dass gleichzeitig die AC-Strombelastung der Vorrichtung minimiert wird und die Wasserzersetzungsreaktion an den Edelmetallgrenzflächen positiv beeinflusst wird.

## Beschreibung

Die Erfindung betrifft eine Vorrichtung zur Herstellung von Glasprodukten aus einer Glasschmelze unter Vermeidung von Blasenbildung gemäß dem Oberbegriff des Anspruchs 1 sowie ein mit der Vorrichtung ausführbares Verfahren gemäß dem Oberbegriff des nebengeordneten Anspruchs. Insbesondere betrifft die Erfindung eine Vorrichtung und ein Verfahren zur Herstellung von Glasprodukten, wie z.B. Rohrglas, aus einer Glasschmelze, die in einem elektrisch beheizten Tiegel mittels eines darin befindlichen Bauteils konditioniert, insbesondere homogenisiert wird. Bei einem solchen Tiegel kann es sich z.B. um einen Rührtiegel handeln, in dem als Bauteil ein Rührorgan drehbeweglich montiert ist. Es kann sich z.B. aber auch um einen Tiegel handeln, in dem als Bauteil sich ein Rohr befindet, um z.B. nach dem Vello-Verfahren Rohrglas herzustellen. Die Erfindung soll aber auf jede Art von Tiegel und ein darin befindliches Bauteil anwendbar sein.

### HINTERGRUND DER ERFINDUNG

Zur Herstellung von Glasprodukten werden Vorrichtungen verwendet, die auch als Glasschmelzaggregate bzw. allgemeiner auch als Produktionsaggregate bezeichnet werden. Bei der Herstellung soll u.a. die Blasenbildung in dem jeweiligen Glasschmelzaggregat minimiert oder möglichst ganz unterbunden werden.
Ein typisches Glasschmelzaggregat umfasst den Bereich von der Einlage des Gemenges mit den Einlegemaschinen bis hin zum Auslass, an dem das noch flüssige Glas an die Nachverarbeitungseinrichtungen (zur Formgebung des gewünschten Glasproduktes) übergeben wird. Diese können z.B. Tropfenspeiser, Walzmaschinen, Rohrziehanlagen oder auch ein Zinnbad sein, auf das das flüssige Glas aufläuft.
Glasschmelzwannen bestehen in der Regel aus einem Bereich, der zur Bildung der flüssigen Glasschmelze dient, einem Bereich, in dem die Schmelze geläutert wird, wobei die nach dem Einschmelzprozess noch verbliebenen Restgasblasen aus der Schmelze entfernt werden, und einem Bereich, der zur Konditionierung dient. In diesem letzten Bereich wird die Schmelze in der Regel noch homogenisiert und auf die für die Nachverarbeitung notwendigen Temperaturen gebracht. Die für den gesamten Schmelzprozess notwendigen Temperaturen sind stark glasartenabhängig. So werden Kalk-Natron-Gläser, die z.B. zur Produktion von Fensterglas und Glasbehältern verwendet werden, bei deutlich niedrigeren Temperaturen geschmolzen als z.B. Spezialgläser für Displayanwendungen oder auch Glaskeramiken.
Die Schmelzwanne kann rein fossil beheizt sein, mit einer elektrischen Zusatzheizung versehen sein oder auch vollständig vollelektrisch betrieben werden. Als Verbrennungsmedium für die Gasbrenner, das in der Regel vorgewärmt wird, kann normale Luft oder auch reiner Sauerstoff verwendet werden.
Die Einschmelz- und Läuterzonen können sich in einem gemeinsamen Becken oder auch in räumlich getrennten Abschnitten befinden. Auch sind verschiedene Einbauten zur Strömungsbeeinflussung Stand der Technik.
Der Konditionierungsschritt wird in der Arbeitswanne oder in einem Rinnen- und Verteilersystem durchgeführt. Letzteres kann in vielfaltiger Weise aufgebaut sein, wobei es ein oder mehrere metallische Komponenten oder Einbauten enthalten kann. Hier kommen auch vielfach Rührorgane (Rührer; Rührnadeln...) zur Homogenisierung zum Einsatz, welche dazu die in einem Rührtiegel befindliche Glasschmelze rühren.
Es ist hinlänglich bekannt, dass in elektrisch beheizten Glasschmelzaggregaten, so auch in Rührtiegeln, sich in der Glasschmelze Blasen ausbilden können, die letztlich die Produktqualität maßgeblich verschlechtern und deren Entstehung daher möglichst ganz unterbunden werden sollte.

In der DE 10 2010 037 376 A1 werden ein Verfahren und eine Vorrichtung zur Herstellung von Glasprodukten offenbart, wobei wesentliche Einschränkungen bei der elektrischen Beheizung von Glasschmelzen beschrieben werden. Die Blasenbildung an und in der Nähe der Heizelektroden sowie der Stromzuführungsflansche, welche durch zu hohe Strombelastungen verursacht wird, kann positiv beeinflusst werden durch die eingesetzte Heizfrequenz, die verwendeten Elektrodenmaterialien und durch die Eigenschaften des Glases selbst. Es werden Empfehlungen für einzuhaltende Grenzwerte der Strombelastung für verschiedene Redox-Systeme gegeben.

In der DE 199 55 827 A1 werden ein Verfahren und eine Vorrichtung zu Verbesserung der Glasqualität offenbart, wobei die (stromlose) O₂-Blasenbildung aufgrund Wasserzersetzung vermieden wird, indem eine Gleichspannungsquelle mit einem leitenden Teil (z.B. Wandung) des Aggregats und einer in die Glasschmelze hineinragenden Elektrode kontaktiert wird, um ein Potentialgefälle in der Glasschmelze zu erzeugen, welches bewirkt, dass der nach Abwanderung des Wasserstoffs verbleibende Sauerstoff ionisiert wird, d.h. zu negativ geladenen O²-Ionen umgewandelt wird, welche sich -anders als neutrale O²-Moleküle- in unbegrenzter Menge in der Schmelze lösen und sich somit nicht zu Gasblasen zusammenballen.

Weitere Verfahren und Vorrichtungen zur Herstellung von Glasprodukten unter Vermeidung von Gasblasenbildung werden in folgenden Druckschriften offenbart:
DE 10 2008 042 117 A1, JP H 09 67 127 A und JP 2005 060 215 A.

Demnach befassen die bekannten Verfahren und Vorrichtungen sich entweder vornehmlich nur mit dem Problem der (stromlosen) Gasblasenbildung aufgrund Wasserzersetzung oder mit dem Problem der (strombedingten) Gasblasenbildung aufgrund elektrischer Wechselstrombeheizung. Wünschenswert aber wäre eine Lösung, die beide Probleme in einer effizienten Weise behandelt und löst.

Aufgabe der Erfindung ist es, ein Verfahren und eine Vorrichtung zur Herstellung von Glasprodukten der eingangs genannten Art weiter zu verbessern, so dass sowohl stromlose wie auch strombedingte Blasenbildungen effektiv unterbunden werden.

Gelöst wird die Aufgabe durch eine Vorrichtung mit den Merkmalen des Anspruchs 1 sowie durch ein Verfahren mit den Merkmalen des nebengeordneten Anspruchs.

Demgemäß und ausgehend von einer Vorrichtung, die einen Tiegel, wie z.B. einen Rührtiegel, und ein darin befindliches Bauteil, wie z.B. ein drehbeweglich montiertes Rührorgan, aufweist, und die zum Heizen der Glasschmelze ein Wechselstromaggregat aufweist, das den Tiegel bzw. Rührtiegel über Stromanschlusselemente bestromt, wird nun das Bauteil bzw. Rührorgan über eine Stromdrossel, die eine veränderbare Impedanz aufweist, mit einem der Stromanschlusselemente (z.B. unterer Heizflansch) des Tiegels bzw. Rührtiegels verbunden. Mit Hilfe einer solchen Stromdrossel kann durch Einstellen der Impedanz erreicht werden, dass gleichzeitig die AC-Strombelastung der Vorrichtung minimiert wird und die Wasserzersetzungsreaktion positiv beeinflusst wird.
Die Erfindung gilt für alle Arten von Tiegeln und darin befindlichen Bauteilen. Wenn es sich beispielsweise um einen Rührtiegel mit einem darin befindlichem Rührer handelt, so wird vorzugsweise der Rührer mithilfe eines Schleifkontaktes und einem externen Kabel direkt mit einem Heizflansch verbunden. Dadurch ändern sich das elektrische Feld und auch die Stromdichteverteilung in der Vorrichtung. Praktische Versuche haben gezeigt, dass die Verbindung mit dem unteren Heizflansch den größten Effekt auf die Blasenqualität hat. Oft war dieser Effekt nur kurzzeitig, so dass die Verbindung wieder getrennt wurde. In der Regel führte jede Änderung, d.h. An- oder Abklemmen des Schleifkontaktes bereits zu einer Reduzierung der Blasen und somit zur Verbesserung der Produktqualität. Daher könnte eine reversierende Schaltung des Schleifkontaktes mit der Möglichkeit der Vorgabe einer Zeitdauer umgesetzt werden.
Dabei geht die Erfindung von folgender überraschender Erkenntnis aus:
Zur Verringerung der strombedingten Blasenbildung wäre es eine einfach zu realisierende Maßnahme, den Wechselstrom und damit die Stromdichte soweit wie möglich zu reduzieren. Damit würden zwar eine hohe Stromdichte an den Rührerflügen und die damit einhergehende Blasenbildung vermieden, allerdings könnte ein zu geringer Wechselstrom wohlmöglich nicht ausreichen, um einen wirksamen Gleichstrompuffer für die Wasserzersetzungsreaktionen an den leitenden Wandungen des Rührtiegels auszubilden.

Daher wird mit Hilfe der hier vorgeschlagenen Stromdrossel bewirkt, dass durch Einstellen der Impedanz auf einen für die jeweilige Konfiguration optimalen Wert sich eine minimal auftretende Blasenbildung einstellt, so dass die Produktqualität in einfacher und sehr effektiver Weise optimiert werden kann. Versuche haben gezeigt, dass überraschender Weise der Blasenausfall bei einer bestimmten Impedanz Z_{D} dieser Drossel ein Minimum erreicht, d.h. dass ein zu geringer AC-Strom oder ein zu hoher AC-Strom in diesem Zweig zu mehr Blasen im Produkt führt. Die Impedanz der Drossel kann in einer Ausführung der Erfindung auf einfache Weise über entsprechende Anzapfungen und über einen Widerstand eingestellt werden, falls nämlich die Stromdrossel über einen Heiztransformator realisiert wird. Man kann hierzu die Sekundärseite oder auch die Primärseite des Transformators nutzen; wichtig ist, das Übersetzungsverhältnis des Transformators zu beachten. Das Prinzip der Erfindung und deren Effekte werden nachfolgend noch eingehender beschrieben. Dazu werden bevorzugte Ausführungsbeispiele offenbart, die sich auch aus den Unteransprüchen ergeben.

Demnach ist vorzugsweise der Rührtiegel aus einem Edelmetall oder einer Edelmetalllegierung, insbesondere aus einer PtRh-Legierung, gefertigt, und als Stromanschlusselemente dienen ein erster Heizflansch, der an einem oberen Ende des Rührtiegels montiert ist, sowie ein zweiter Heizflansch, der an einem unteren Ende des Rührtiegels montiert ist. Vorzugsweise wird das Rührorgan über die Stromdrossel mit dem zweiten Heizflansch (am unteren Ende des Rührtiegels) verbunden. Das Rührorgan selbst kann z.B. ein Rührer oder auch eine oder mehrere Rührnadeln sein.

In einer bevorzugten Ausführung der Erfindung weist die Vorrichtung ein Kontaktanschlusselement, insbesondere einen Kontaktierungsflansch, auf, der die Stromdrossel mit dem Rührtiegel alternativ zu dem Kontakt über das Stromanschlusselement kontaktiert. Dieser zusätzliche Kontaktierungsflansch dient nicht zu Heizzwecken, sondern nur zur Kontaktierung des Rührers über die Drossel mit dem Tiegel. Die veränderbare Impedanz der Stromdrossel ist vorzugsweise so eingestellt, dass eine in der Glasschmelze, insbesondere an Enden von Rührerflügeln, sich ausbildende Wechselstromdichte zwischen einem unteren Grenzwert und einem oberen Grenzwert liegt. Diesbezüglich gibt der untere Grenzwert eine minimal erforderliche Wechselstromdichte an, die an der Innenwandung des Rührtiegels einen ausreichenden Gleichstrompuffer ausbildet, welcher Wasserzersetzungsreaktionen mit Blasenbildung verhindert. Der obere Grenzwert wiederum gibt eine maximal zulässige Wechselstromdichte an, oberhalb derer sich in der Glasschmelze Blasen, insbesondere an Rührerflügelenden und/oder im Bereich der Stromanschlusselemente, ausbilden. Mit dem eingestellten Impedanzwert kann man somit das Optimum für AC-Belastung und Gleichstromschutz finden.
Insbesondere kann die Impedanz der Stromdrossel auch abhängig von mindestens einem der folgenden Parameter eingestellt werden:
- Frequenz eines von dem Wechselstromaggregat erzeugten Heizstroms;
- Material des Tiegels, insbesondere des Rührtiegels, des Rührorgans und/oder der Stromanschlusselemente;
- Geometrie einschließlich der Materialdicke des Tiegels, insbesondere des Rührtiegels, des Rührorgans und/oder der Stromanschlusselemente;
- Impedanzen der Stromanschlusselemente, des Kontaktanschlusselementes und/oder von deren Zuleitungen;
- Art des verwendeten Glases, insbesondere Art und Menge von in der Glasschmelze verwendeten Redox-Elementen.

Die Erfindung und die sich daraus ergebenden Vorteile werden nun im Detail anhand von Ausführungsbeispielen und unter Bezugnahme auf die beiliegenden Zeichnungen beschrieben, die schematisch folgende Darstellungen wiedergeben:
- Fig. 1: zeigt den Aufbau der Vorrichtung in einer ersten Ausführungsform;
- Fig. 2: zeigt den Aufbau der Vorrichtung in einer zweiten Ausführungsform;
- Fig. 3: zeigt den Aufbau der Vorrichtung in einer weiteren Ausführungsform; und
- Fig. 4: zeigt das Ablaufdiagramm für das Verfahren, das mittels der Vorrichtung ausgeführt wird.

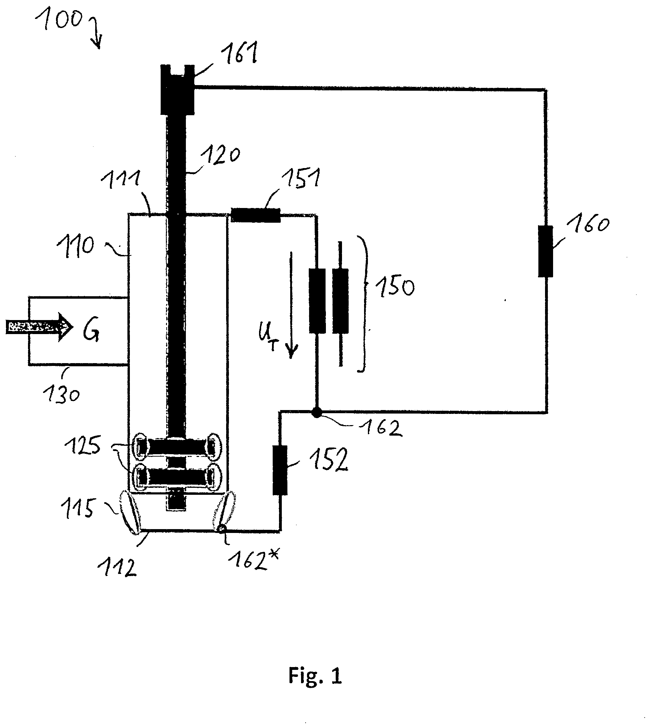

In der Fig. 1 wird in schematische Weise der Aufbau einer erfindungsgemäßen Vorrichtung 100 in einer ersten Ausführungsform dargestellt. Die Vorrichtung kann als Produktions- bzw. Glasschmelzaggregat verstanden werden und umfasst insbesondere einen Rührtiegel 110, in dem ein drehbeweglich montiertes Rührorgan 120 zum Rühren der Glasschmelze G angeordnet ist. Die Glasschmelze wird über eine Speiserinne 130 oder dergleichen dem Rührtiegel 110 zugeführt. Zum weiteren Beheizen der Glasschmelze innerhalb des Rührtiegels weist die Vorrichtung ein Wechselstromaggregat 150 auf, das den Rührtiegel 110 über Stromanschlusselemente 111 und 112 bestromt. Die Stromanschlusselemente werden in diesem Beispiel durch einen oberen Heizflansch 111 und einen unteren Heizflansch 112 gebildet. Das Wechselstromaggregat wird hier durch einen Heiztransformator 150 realisiert; wobei die Stromleitungen mit ihren jeweiligen Impedanzen 151 und 152 dargestellt sind. Es ist an sich bekannt, dass im unteren Bereich des Rührtiegels, insbesondere an den Rührerflügeln, sich kritische Bereich 125 für eine (strombedingte) Blasenbildung durch hohe Stromdichte ausbilden. In Nähe des unteren Heizflansches 112 wiederum bilden sich Bereiche 115 aus, die für eine (stromlose) Blasenbildung durch Wasserzersetzung besonders kritisch sind.
Um beiden Arten der Blasenbildung effektiv entgegen zu wirken, ist in der Vorrichtung 100 eine Stromdrossel 160 vorgesehen, die das Rührorgan 120 elektrisch mit mindestens einem Teil des Rührtiegels, hier mit dem unteren Heizflansch 112 verbindet. Vorzugsweise wird der Rührer mithilfe eines Schleifkontaktes 161 und einem externen Kabel direkt mit einem Heizflansch 112 verbunden. Dadurch ändern sich das elektrische Feld und auch die Stromdichteverteilung in der Vorrichtung. Praktische Versuche haben gezeigt, dass die Verbindung mit dem unteren Heizflansch den größten Effekt auf die Blasenqualität hat. Oft war dieser Effekt nur kurzzeitig, so dass die Verbindung wieder getrennt wurde. In der Regel führte jede Änderung, d.h. An- oder Abklemmen des Schleifkontaktes bereits zu einer Reduzierung der Blasen und somit zur Verbesserung der Produktqualität. Daher könnte eine reversierende Schaltung des Schleifkontaktes mit der Möglichkeit der Vorgabe einer Zeitdauer umgesetzt werden.
Bei direkter Verbindung des Rührers 120 mit dem unteren Flansch 112 können hohe AC-Ströme (bis zu 100 A) fließen, welche in Kombination mit hohen Rührerdrehzahlen die Lebensdauer des Schleifkontaktes negativ beeinflussen. Daher ist es sinnvoll, diesen AC-Strom über eine Strombegrenzungsdrossel zu reduzieren. Weitere Versuche haben gezeigt, dass die Impedanz Z_{D} der Stromdrossel 160 den Blasenausfall positiv beeinflusst.

Demnach wird hier vorgeschlagen, das Rührorgan 120 über eine Stromdrossel 160 mit veränderbarer Impedanz mit einem der Stromanschlusselemente, hier dem Heizflansch 112, des Rührtiegels 110 zu verbinden. Um die überraschende Wirkung einer optimal eingestellten Drossel-Impedanz noch besser zu verstehen, werden hier die Effekte auf die Blasenbildungsmechanismen im Detail erläutert:

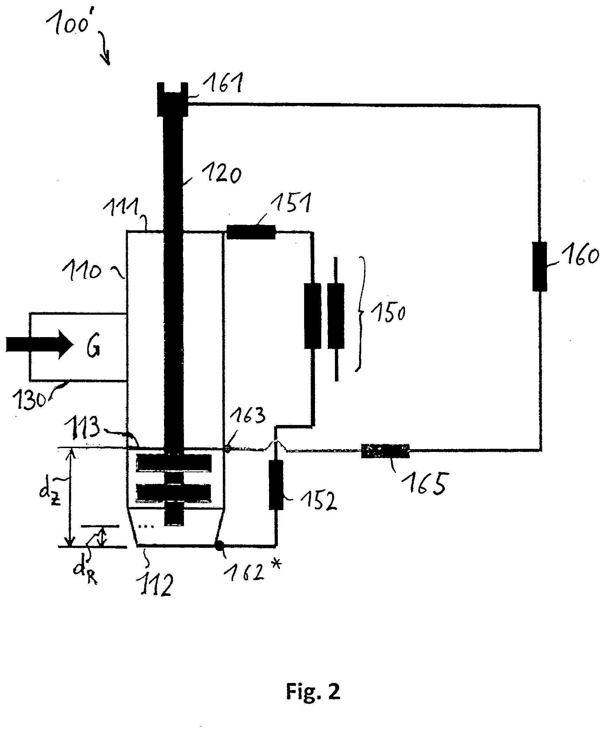

Wie oben bereits beschrieben, ist die wesentliche Quelle für Blasen die Wasserzersetzungsreaktion. Diese Reaktion findet vor allem an der Edelmetallhaut statt, die einen direkten oder indirekten Kontakt zu der äußeren Atmosphäre besitzt. Sie wird beeinflusst von dem Gehalt an Wasser im Glas, von den im Glas vorliegenden Redox Elementen, die einen Puffer für den sich bildenden Sauerstoff bilden, und von dem Strömungsfeld, was an Sauerstoff angereicherte Glasbereiche wegtransportieren und damit verdünnen kann, bevor es zu einer Blasenausscheidung kommt. Simulationen zeigen, dass hohe Rührerdrehzahlen diesen Abtransport begünstigen. Aufgrund von unterschiedlichen Diffusionskonstanten der beteiligten Redox Spezies in den beiden Halbwellen einer Wechselstrom Beheizung (nicht reversibel) von z.B. 50 Hz kommt es zu einem Aufbau eines Gleichspannungspotentials, welches einen zusätzlichen Puffer für die Wasserzersetzungsreaktion bildet. Durchgeführte Simulationen zeigen die Effektivität dieses Prozesses.
Aus diesem Grunde ist es verständlich, dass hohe AC-Ströme und damit hohe Stromdichten an den Rührflügelspitzen zu einer Blasenbildung führen, während niedrige AC-Ströme, die zu keiner Stromdichteerhöhung an der Rührerflügelspitzen führen und damit dort keine Blasen verursachen, nicht genügen, um einen ausreichenden Gleichstrompuffer für die Wasserzersetzungsreaktion an der Edelmetallwand des Aggregats zu bilden.
Durch den Einsatz der Stromdrossel 160 mit veränderlicher Impedanz kann nun für jedes Aggregat, wie z.B. für das in Fig. 1 dargestellte Rührer-Tiegel-System, ein Optimum bezüglich AC-Belastung und Gleichstromschutz erzielt werden.
Weitere Untersuchungen haben gezeigt, dass als zusätzlicher Parameter zur Einstellung eines optimierten elektrischen Feldes bezüglich der AC-Belastung und von Tiegelbereichen bezüglich der Wasserzersetzung ein weiterer Flansch nützlich ist, der nicht zu Heizzwecken dient, sondern nur zur Kontaktierung des Rührers über die Drossel. Diese Ausführungsform ist als Vorrichtung 100' in der Fig. 2 dargestellt.

Wie die Fig. 2 zeigt weist die Vorrichtung 100' zusätzlich ein Kontaktanschlusselement, hier in Form eines Kontaktierungsflansches 113, auf, der die Stromdrossel 160 mit dem Rührtiegel 110 alternativ zu dem Kontakt über das Stromanschlusselement 112 (vergl. Fig. 1) kontaktiert. Hierdurch wird der Schleifkontakt 161 über die Drossel 160 direkt mit dem Kontaktierungsflansch 113 des Rührtiegels verbunden. Der Kontaktierungsflansch 113 dient nicht zum Bestromen des Rührtiegels, sondern ausschließlich zur Kontaktierung des oberen Endes des Rührers 120 mit dem unteren Bereich des Rührtiegels 110.

Auch in dem in Fig. 2 gezeigten Beispiel wird die Impedanz (Z_{D}) der Stromdrossel 160 so eingestellt ist, dass eine in der Glasschmelze G, insbesondere an Enden von Rührerflügeln, sich ausbildende Wechselstromdichte (I) zwischen einem unteren Grenzwert (Imin) und einem oberen Grenzwert (Imax) liegt. Dabei gibt der untere Grenzwert (Imin) eine minimal erforderliche Wechselstromdichte an, die an der Innenwandung des Rührtiegels 110 einen ausreichenden Gleichstrompuffer ausbildet, welcher Wasserzersetzungs-reaktionen mit Blasenbildung verhindert. Und der obere Grenzwert (Imax) gibt eine maximal zulässige Wechselstromdichte an, oberhalb derer sich in der Glasschmelze G Blasen, insbesondere an Rührerflügelenden und/oder im Bereich der Stromanschlusselemente, ausbilden.
Die Impedanz (Z_{D}) der Stromdrossel 160 kann auch noch abhängig von mindestens einem der folgenden Parameter eingestellt werden:
- Frequenz eines von dem Wechselstromaggregat 150 erzeugten Heizstroms;
- Material und/oder Geometrie, wie z.B. Materialdicke, des Rührtiegels 110, des Rührorgans 120 und/oder der Stromanschlusselemente 111, 112;
- Impedanzen Z_{O}; Z_{U}; Zz der Stromanschlusselemente 111, 112, des Kontaktanschlusselementes 113 und/oder von deren Zuleitungen 151, 152 und 165;
- Art des verwendeten Glases, insbesondere Art und Menge von in der Glasschmelze verwendeten Redox-Elementen.

Zu der Geometrie der Anlage werden folgende Größenangaben exemplarisch genannt: Der Abstand d_{R} zwischen Ende des Rührorgans 120 und dem Boden des Tiegels 110 beträgt beispielsweise 0-20 mm; der Abstand dz zwischen dem Boden und dem Kontaktflansch 113 kann beispielsweise 50-200 mm betragen.
Für die Dimensionierung der elektrischen Bauteile werden hier die folgenden exemplarischen Angaben gemacht: Der Transformator 150 sollte für die Bestromung über die Flansche eine Spannung U_{T} von etwa 2-8 Volt abgeben; als Stromstärke ist ein Bereich von etwa 500-3000 A zu nennen. Die obere Zuführungsleitung 151 weist eine Impedanz von etwa 0,2-1 mOhm auf; die untere Zuleitung 152 von etwa 1-5 mOhm. Wenn in Fig. 2, die Stromdrossel 160 an dem Zusatzflansch 113 angeschlossen wird, dann sind als Zusatzwiderstand bzw. -impedanz 165 etwa 0,2-1 mOhm zu berücksichtigen.

Ziel der vorliegenden Schaltungen ist es, die Impedanz der Stromdrossel 160 einschließlich des Schleifkontaktes so einzustellen, dass die Wechselstrombelastung, insbesondere an den Rührerflügeln, minimal wird, und dies bei gleichzeitiger Maximierung des Gleichstrompuffers.

Wenn man idealerweise die Wasserzersetzungsreaktion durch andere Maßnahmen komplett unterdrückt hat, kann die Impedanz der Drossel so eingestellt werden, wie oben beschrieben, dass man im System an allen Positionen unterhalb der AC-Strombelastungsgrenze liegt. Dies kann zusätzlich durch weiter im System vorliegende Impedanzen (wie in den Fig. 1 und 2 skizziert) unterstützt werden.

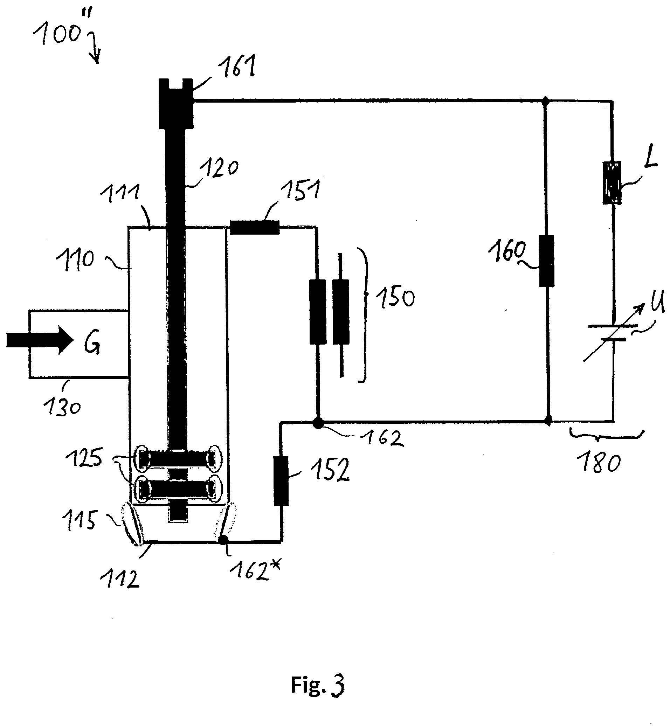

In der Fig. 3 ist als weiteres Ausführungsbeispiel eine Vorrichtung 100" dargestellt, die zunächst denselben Aufbau wie die Vorrichtung 100 aus der Fig. 1 aufweist. In der Fig. 3 ist zusätzlich eine geregelte Gleichstromquelle 180 dargestellt, die parallel zu der Stromdrossel 160 geschaltet ist. Die Impedanz L dient zur wirksamen Unterdrückung des Wechselstroms zum Schutz des Gleichstromgerätes, das die einstellbare Gleichspannung U erzeugt. Mit Hilfe der Gleichstromquelle 180 kann ebenfalls ein Gleichstrom bereit gestellt werden, der die Wasserzersetzungsreaktion an den Edelmetallgrenzflächen positiv beeinflussen kann. Somit kann die Stromdrossel 160 noch gezielter auf die Vermeidung durch die durch Wechselstrom verursachten Blasen eingesetzt werden. In diesem Fall würde der für den Prozess notwendige Gleichstrom nur von der Gleichstromquelle geliefert werden.

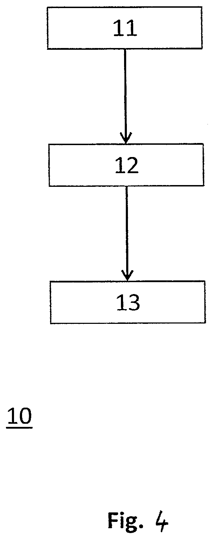

Daher ist die zusätzliche Gleichstromquelle 180 insbesondere für solche Fälle von Nutzen, in denen die in der Schmelze vorherrschende Wechselstromdichte I sich nicht mehr in dem Prozessfenster (Iₘᵢₙ < I < Iₘₐₓ) befindet, sondern sich dem oberen Grenzwert (Iₘₐₓ) annähert oder diesen sogar überschreitet. Dann wird die Gleichstromquelle 180 aktiviert und kann für zusätzlichen, unterstützenden Gleichstromschutz sorgen. Vorzugsweise ist die Gleichstromquelle so aufgebaut, dass sie eine Induktivität L aufweist, welche in Reihe zum eigentlichen Gerät, welches die Gleichspannung U erzeugt, geschaltet ist und somit die Gleichstromquelle vor Wechselstromeinflüssen schützt, welche von den Heizströmen (Wechselströmen) herrühren.
Das erfindungsgemäße Verfahren zur Herstellung von Glasprodukten wird anhand eines in der Fig. 4 dargestellten Ablaufdiagramms beispielhaft veranschaulicht. Nachfolgend wird auf diese Fig. 4 sowie nochmals auf die Fig. 1-3 Bezug genommen:
Das Verfahren 10 beginnt mit der Schrittfolge 11, in der die Glasschmelze G in dem Rührtiegel 110 mittels des Rührorgans 120 gerührt wird, wobei zum Heizen der Glasschmelze der Rührtiegel 110 über die Stromanschlusselemente 111; 112 bestromt wird. In einer nachfolgenden Schrittfolge 12 wird das Rührorgan 120 über die Stromdrossel 160, welche die veränderbare Impedanz aufweist, mit einem der Stromanschlusselemente, hier mit dem unteren Heizflansch 112, des Rührtiegels 110 verbunden. Dabei wird die Impedanz (Z_{D}) der Stromdrossel 160 so wie oben beschrieben eingestellt, d.h. so, dass eine in der Glasschmelze sich ausbildende Wechselstromdichte (I) zwischen einem unteren Grenzwert (Imin) und einem oberen Grenzwert (Imax) liegt. In einer weiteren Schrittfolge 13 wird die Impedanz (Z_{D}) der Stromdrossel 160 auch noch abhängig von mindestens einem der folgenden Parameter eingestellt wird:
- Frequenz eines von dem Wechselstromaggregat 150 erzeugten Heizstroms;
- Material und/oder Geometrie, wie z.B. Materialdicke, des Rührtiegels 110, des Rührorgans 120 und/oder der Stromanschlusselemente 111, 112;
- Impedanzen Z_{O}; Z_{U}; Zz der Stromanschlusselemente 111, 112, des Kontaktanschlusselementes 113 und/oder von deren Zuleitungen 151, 152 und 165;
- Art des verwendeten Glases, insbesondere Art und Menge von in der Glasschmelze verwendeten Redox-Elementen.

Das Verfahren 10 (Fig. 4) kann also von der offenbarten Vorrichtung (Fig. 1 und 3) ausgeführt werden. Hinsichtlich der Konfiguration der Vorrichtung bzw. des Aggregats sollen hier noch die folgenden Anmerkungen gemacht werden:

Idealerweise besitzt die Glasschmelze keinen direkten Kontakt zur Masse. Direkte massive Erdungen der Glasschmelze werden in der Regel aus Personensicherheitsgründen durchgeführt, vor allem wenn der Glasschmelzprozess durch eine elektrische Zusatzbeheizung (EZH) unterstützt wird. Da das Glas bei den für den Prozess notwendigen Temperaturen einen elektrisch leitfähigen Elektrolyten darstellt, können sich die an den Heizelektroden anliegenden zum Teil recht hohen Spannungen in der gesamten Anlage verschleppen. Diese Personensicherheitserdungen werden vor allem in Anlagenbereichen in der Nähe der Nachverarbeitung eingesetzt, wo häufig manuell hantiert werden muss und eine sichere Erdfreiheit nur äußerst aufwendig realisiert und dauerhaft aufrechterhalten werden kann. Vielfach ist ein erdfreier Aufbau nur unter verhältnismäßig hohen Kosten zu realisieren, z.B. bei einem Floatbad.
In dem gesamten Erdungsumfeld muss auch die verwendete Messwerterfassungstechnik berücksichtigt werden, da bei der Messung von Spannung gegen Erde immer kleine unter Umständen nicht zu vernachlässigbare Ströme (sowohl AC als auch DC) fließen können.
Häufig werden kurz vor der Formgebung metallische Bauteile aus Edelmetalllegierungen eingesetzt, die im Inneren das flüssige Glas transportieren. Um eine gute chemische Homogenität und Temperaturkonstanz zu erzielen, kommen bevorzugt Rührorgane in Form von Rührern oder Rührnadeln zum Einsatz, die in dem Rührtiegel arbeiten. Um die für die Formgebung notwendigen Temperaturen zu erreichen, einzustellen und zu regeln, werden die metallischen Bauteile in der Regel elektrisch beheizt. Am einfachsten und kostengünstigsten geschieht dies über die Einbringung eines direkten elektrischen Stromes über Flansche, die sogenannten Heizflansche.
Je nach Komplexität des Bauteiles kommen zwei oder mehrere dieser Flansche zum Einsatz. Die Beheizungsfrequenz beträgt häufig 50 Hz, was der Netzfrequenz entspricht. Gleichströme scheiden aus, da wegen des Widerstandsverhältnisses zwischen Edelmetall und Glas immer ein Teil des Heizstromes im Glas selbst fließt und damit zur Elektrolyse und Blasenbildung führen wird. Eine induktive Beheizung ist ebenfalls möglich, findet jedoch in der Regel nur bei kleineren Bauteilen Anwendung, da der Konstruktions- und Bauaufwand im Vergleich zu der Widerstandsheizung sehr aufwendig ist. Eine indirekte Strahlungsheizung findet man kurz vor der Formgebung in der Regel nicht, da es in diesem Bereich auf eine schnelle Temperaturregelung ankommt. Da die Edelmetallbauteile über einen Feuerfestaufbau gestützt werden, ist die Strahlungsheizung zu träge, um schnelle Temperaturänderungen durchfuhren zu können.
Es ist von der Beheizung der Glasschmelze über Heizelektroden an sich bekannt, dass es ab einer bestimmten Stromdichte auf der Elektrodenoberfläche zu einer Blasenbildung kommt. Die noch tolerable Stromdichte, bei der es noch nicht zu einer Blasenbildung kommt, hängt ab von der Beheizungsfrequenz, von dem verwendeten Elektrodenmaterial und von der Glasart selbst. So ist weiterhin bekannt, dass beim Einsatz von 10 kHz statt 50 Hz eine höhere Stromdichte angewandt werden kann, bevor es zu einer Blasenbildung kommt. Ebenso ist bekannt, dass die tolerable Stromdichte beim Einsatz von Edelmetalllegierungen als Elektrodenmaterial deutlich niedriger ist als bei Verwendung von Molybdän oder Wolfram.
Mittlerweile sind die Kosten für eine 10 kHz-Beheizung fast ähnlich zu einer 50 Hz-Beheizung, was die Ausrüstung, wie Umrichter, Kabel, Anpasstransformatoren etc., betrifft. Aufwendiger hingegen ist die konstruktive Umsetzung des Gesamtaggregates wegen der beim Einsatz von 10kHz nicht zu vernachlässigbaren Induktionsphänomene in der metallischen Peripherie.
Die tägliche Praxis in Kombination mit theoretischen Überlegungen und Laborversuchen hat gezeigt, dass es im wesentlichen zwei Hauptursachen für eine Blasenbildung an einem Edelmetallbauteil gibt: Die erste Ursache ist die sogenannte Wasserzersetzung, bei der sich im Glas gelöstes Wasser in Sauerstoff und Wasserstoff aufspaltet. Die Triebkraft für diese Reaktion ist der Unterschied in dem Wasserstoffpartialdruck zwischen dem flüssigen Glas und dem Außenraum, da der Wasserstoff bei hohen Temperaturen durch das Edelmetallblech hindurch diffundiert. Die zweite Ursache ist die Wechselstromdichte in der Nähe der Stromzuführungsflansche und vor allem an den Rührflügelenden beim Einsatz von Rührern in dem entsprechenden Rührtiegel. In der Regel werden durch beide Mechanismen Sauerstoffblasen gebildet. Eine Blasenbildung aufgrund von Kavitation an den Rührerflügelenden wurde schon oft diskutiert, ist jedoch in der Regel nur schwer zweifelsfrei nachzuweisen.

Da der Rührer oder Rührnadel auf der glaszugewandten Seite aufgrund von Qualitätsanforderungen an das Produkt eine Edelmetallverkleidung besitzt, ist der gesamte Rührkörper in Vergleich zu dem Glas sehr gut elektrisch leitfähig. Daher beeinflusst er das von der Heizspannung des Rührtiegels gebildete elektrische Feld. Ein Teil des Heizstromes wird damit über den Rührer fließen. Bestimmte Bereiche können damit die kritische AC-Stromstärke überschreiten und zu einer Blasenbildung führen. Eine wesentliche Rolle spielt dabei auch der sogenannte Verdünnungseffekt, der durch das Strömungsfeld des Glases (Strömung verursacht durch die Rührerbewegung und die Durchsatzströmung) verursacht wird. Das mit Sauerstoff angereicherte Glas wird stetig abtransportiert, bevor der kritische Druck für eine Blasenbildung erreicht wird.
Der Rührer könnte zwar mithilfe eines Schleifkontaktes und einem externen Kabel direkt (ohne Stromdrossel) mit einem der Heizflansche verbunden werden. Dadurch würde sich bereits das elektrische Feld und auch die Stromdichteverteilung im System ändern. In Versuchen hat sich gezeigt, dass die Verbindung mit dem unteren Heizflansch den größten Effekt auf die Blasenqualität hat. Oft war dieser Effekt jedoch nur kurzzeitig, so dass die Verbindung wieder getrennt werden musste. Dabei führte jede Änderung, d.h. An- oder Abklemmen, des Schleifkontaktes bereits zu einer Verbesserung der Blasenqualität im Produkt. Die könnte in einer reversierenden Schaltung des Schleifkontaktes mit der Möglichkeit der Vorgabe einer Zeitdauer umgesetzt werden.
Allerdings können bei direkter Verbindung des Rührers mit dem unteren Flansch hohe Ströme bis zu 100 A fließen, und in Kombination mit hohen Drehzahlen wird dadurch die Lebensdauer des Schleifkontaktes sehr gering. Daher wird eine Stromdrossel, d.h. eine sogenannte Strombegrenzungsdrossel, in die Verbindungsleitung zwischen Rührer und Flansch eingebaut (siehe Fig. 1). Weitergehende Untersuchungen und Versuche haben überraschenderweise gezeigt, dass der Blasenausfall bei einer bestimmten Impedanz Z_{D} dieser Drossel ein Minimum erreichte, was bedeutet, dass ein zu geringer AC-Strom oder ein zu hoher AC-Strom in diesem Zweig jeweils zu mehr Blasen im Produkt führt. Die optimale Impedanz der Drossel kann z.B. auf einfache Weise über entsprechende Anzapfungen und über einen Widerstand auf der Sekundärseite eines Heiztransformators eingestellt werden.

Um diese überraschende Erkenntnis zu verstehen, wurden die Blasenbildungsmechanismen im Detail betrachtet und untersucht:
Wie oben bereits beschrieben wurde, ist eine wesentliche Quelle für Blasen die Wasserzersetzungsreaktion. Diese Reaktion findet vor allem an der äußeren Edelmetallhaut statt. Sie wird beeinflusst von dem Gehalt an Wasser im Glas, von den im Glas vorliegenden Redox Elementen, die einen Puffer für den sich bildenden Sauerstoff bilden und von dem Strömungsfeld, was an Sauerstoff angereicherte Glasbereiche wegtransportieren und damit verdünnen kann, bevor es zu einer Blasenausscheidung kommt. Simulationen haben gezeigt, dass hohe Rührerdrehzahlen diesen Abtransport begünstigen. Aufgrund von unterschiedlichen Diffusionskonstanten der beteiligten Redox Spezies in den beiden Halbwellen der 50 Hz Beheizung (nicht reversibel) kommt es zu einem Aufbau eines Gleichspannungspotentials, welches einen zusätzlichen Puffer für die Wasserzersetzungsreaktion bildet. Simulationen haben die Effektivität dieses Prozesses gezeigt.
Aus diesem Grunde ist es verständlich, dass hohe AC-Ströme und damit hohe Stromdichten an den Rührflügelspitzen zu einer Blasenbildung fuhren, während niedrige AC-Ströme, die zu keiner Stromdichteerhöhung an der Rührerflügelspitzen führen und damit dort keine Blasen verursachen, wiederum nicht genügen, um einen ausreichenden Gleichstrompuffer für die Wasserzersetzungsreaktion an der äußeren Edelmetallwand zu bilden.
Um nun für jedes Rührer-Tiegel-System ein Optimum bezüglich AC-Belastung und Gleichstromschutz zu finden, wird die Impedanz der Stromdrossel, wie oben anhand der Fig. 1 und 3 beschrieben, eingestellt.
Als zusätzlichen Parameter zur Einstellung eines optimierten elektrischen Feldes bezüglich AC-Belastung und von Tiegelbereichen bezüglich der Wasserzersetzung, kann ein weiterer Flansch verwendet werden, der nicht zu Heizzwecken dient, sondern nur zur Kontaktierung des Rührers über die Drossel (s. Fig. 2).

Wenn man die Wasserzersetzungsreaktion idealerweise komplett unterdrückt hat, kann die Impedanz der Drossel optimal so eingestellt werden, wie oben beschrieben, dass man im System an allen Positionen unterhalb der AC-Strombelastungsgrenze liegt. Dies kann zusätzlich durch weiter im System vorliegende Impedanzen (wie in den Fig. 1 und 2 skizziert) unterstützt werden.

Zusammenfassend werden in bevorzugten Ausführungsformen Vorrichtungen und Verfahren zur Blasenvermeidung in einem Edelmetallsystem beschrieben, bei dem das Rührorgan über eine veränderliche Impedanz mit einem Heizflansch verbunden wird, dergestalt, dass gleichzeitig die AC-Strombelastung des Systems minimiert wird und die Wasserzersetzungsreaktion positiv beeinflusst wird. Vorzugsweise erfolgt die Einstellung der Impedanz der Drossel über Anzapfungen und Widerstände eines Heiztransformators.

### Bezugszeichenliste

- 100: Vorrichtung zur Herstellung von Glasprodukten (kurz: Glasschmelzaggregat)
- G: Glasschmelze
- 110: Rührtiegel
- 120: Rührorgan, hier als Rührer ausgebildet
- 130: Speiserinne für die Glasschmelze
- 150: Wechselstromaggregat, hier als Heiztransformator ausgebildet
- 160: Stromdrossel mit veränderbarer Impedanz

- 111, 112: Stromanschlusselemente, hier oberer bzw. unterer Heizflansch
- 115: Bereich für mögliche Blasenbildung durch Wasserzersetzung
- 125: Bereich für mögliche Blasenbildung aufgrund der Beheizung durch Wechselstrom

- 151, 152: Impedanzen der Heizstrom-Zuleitungen
- 161: Schleifkontakt am oberen Ende des Rührers als oberer Anschlusspunkt für die Stromdrossel
- 162, 162*: Anschlusspunkte zur Kontaktierung der Stromdrossel
- 165: Impedanz der Zuleitung des zusätzlichen Anschlusspunktes

- 113: Kontaktanschlusselement, hier als zusätzlicher Kontaktierungsflansch für die Stromdrossel
- 163: zusätzlicher Anschlusspunkt zur Kontaktierung der Stromdrossel

- 10: Verfahren zur Herstellung von Glasprodukten
- 11-13: Verfahrens-Schritte

## Patentansprüche

1. Vorrichtung (100) zur Herstellung von Glasprodukten aus einer Glasschmelze (G) unter Vermeidung von Blasenbildung, wobei die Vorrichtung (100) einen Tiegel (110) und ein darin befindliches Bauteil (120) zur Verarbeitung der Glasschmelze (G) aufweist, wobei die Vorrichtung (100) zum Heizen der Glasschmelze (G) ein Wechselstromaggregat (150) aufweist, das den Tiegel (110) über Stromanschlusselemente (111; 112) bestromt,
**dadurch gekennzeichnet, dass**
das in dem Tiegel (110) befindliche Bauteil (120) über eine Stromdrossel (160) mit veränderbarer Impedanz mit einem der Stromanschlusselemente (112) des Tiegels (110) verbunden ist.

2. Vorrichtung (100) nach Anspruch 1, **dadurch gekennzeichnet, dass** der Tiegel (110) aus einem Edelmetall oder einer Edelmetalllegierung, insbesondere aus einer PtRh-Legierung, gefertigt ist, und dass die Stromanschlusselemente einen ersten Heizflansch (111) umfasst, der an einem oberen Ende des Tiegels (110) montiert ist, und einen zweiten Heizflansch (112) umfasst, der an einem unteren Ende des Tiegels (110) montiert ist.

3. Vorrichtung (100) nach einem der vorhergehenden Ansprüche, **dadurch gekennzeichnet, dass** der Tiegel als ein Rührtiegel (110) ausgebildet ist, und dass
das darin befindliche Bauteil als ein Rührorgan, insbesondere als ein Rührer (120) oder als eine Rührnadel, ausgebildet ist.

4. Vorrichtung (100') nach einem der vorhergehenden Ansprüche, **dadurch gekennzeichnet, dass** die Vorrichtung (100') ein Kontaktanschlusselement, insbesondere einen Kontaktierungsflansch (113), aufweist, der die Stromdrossel (160) mit dem Tiegel (110) alternativ zu dem Kontakt über das Stromanschlusselement (112) kontaktiert.

5. Vorrichtung (100") nach einem der vorhergehenden Ansprüche, **dadurch gekennzeichnet, dass** die Vorrichtung (100") eine zu der Stromdrossel (160) parallel geschaltete Gleichstromquelle, insbesondere eine geregelte Gleichstromquelle (180), aufweist.

6. Vorrichtung (100) nach einem der vorhergehenden Ansprüche, **dadurch gekennzeichnet, dass** die Impedanz (Z_{D}) der Stromdrossel (160) so eingestellt ist, dass eine in der Glasschmelze (G), insbesondere an Enden von Rührerflügeln, sich ausbildende Wechselstromdichte (I) zwischen einem unteren Grenzwert (Iₘᵢₙ) und einem oberen Grenzwert (Iₘₐₓ) liegt.

7. Vorrichtung (100) nach Anspruch 6, **dadurch gekennzeichnet, dass** der untere Grenzwert (Iₘᵢₙ) eine minimal erforderliche Wechselstromdichte angibt, die an der Innenwandung des Tiegels (110) einen ausreichenden Gleichstrompuffer ausbildet, welcher Wasserzersetzungsreaktionen mit Blasenbildung verhindert, und dass der obere Grenzwert (Iₘₐₓ) eine maximal zulässige Wechselstromdichte angibt, oberhalb derer sich in der Glasschmelze (G) Blasen, insbesondere an Rührerflügelenden und/oder im Bereich der Stromanschlusselemente, ausbilden.

8. Vorrichtung (100) nach Anspruch 6 oder 7, **dadurch gekennzeichnet, dass** die Impedanz (Z_{D}) der Stromdrossel (160) abhängig von mindestens einem der folgenden Parameter eingestellt ist:
- Frequenz eines von dem Wechselstromaggregat (150) erzeugten Heizstroms;
- Material des Tiegels, insbesondere des Rührtiegels (110) und/oder des Rührorgans (120), und/oder der Stromanschlusselemente (111, 112);
- Geometrie einschließlich Materialdicke des Tiegels, insbesondere des Rührtiegels (110) und/oder des Rührorgans (120), und/oder der Stromanschlusselemente (111, 112);
- Impedanzen der Stromanschlusselemente (111, 112), des Kontaktanschlusselementes (113) und/oder von deren Zuleitungen;
- Art des verwendeten Glases, insbesondere Art und Menge von in der Glasschmelze verwendeten Redox-Elementen.

9. Vorrichtung (100) nach einem der Ansprüche 5 bis 8, **dadurch gekennzeichnet, dass** für den Fall, dass die sich ausbildende Wechselstromdichte (I) den oberen Grenzwert (Imax) erreicht oder übersteigt, die geregelte Gleichstromquelle (180) aktiviert wird, um den Gleichstromschutz zu unterstützen.

10. Vorrichtung (100) nach einem der Ansprüche 5 bis 9, **dadurch gekennzeichnet, dass** die geregelte Gleichstromquelle (180) eine Induktivität (L) aufweist, welche die Gleichstromquelle vor Wechselstromeinflüssen schützt, die von den Heizströmen herrühren.

11. Vorrichtung (100) nach einem der vorhergehenden Ansprüche, **dadurch gekennzeichnet, dass** das Wechselstromaggregat ein Heiztransformator (150) ist und dass die Einstellung der Impedanz der (Z_{D}) der Stromdrossel (160) über Anzapfungen und Widerstände des Heiztransformators (150) erfolgt.

12. Vorrichtung nach einem der vorhergehenden Ansprüche, **dadurch gekennzeichnet, dass** der Tiegel nicht als Rührtiegel ausgebildet ist, sondern als Tiegel für den Einsatz in einer Rohrziehanlage, wobei das in dem Tiegel befindliche Bauteil als Rohr oder Hohlnadel ausgebildet ist, mittels dem Rohrglas aus der Glasschmelze, insbesondere gemäß dem Vello-Verfahren, gezogen wird.

13. Verfahren zur Herstellung von Glasprodukten aus einer Glasschmelze (G) unter Vermeidung von Blasenbildung, wobei die Glasschmelze (G) in einem Tiegel (110) mittels eines darin befindlichen Bauteils (120) verarbeitet wird, und wobei zum Heizen der Glasschmelze (G) der Tiegel (110) über Stromanschlusselemente (111; 112) bestromt wird, die mit einem Wechselstromaggregat (150) verbunden werden,
**dadurch gekennzeichnet, dass**
das in dem Tiegel (110) befindliche Bauteil (120) über eine Stromdrossel (160) mit veränderbarer Impedanz mit einem der Stromanschlusselemente (112) des Tiegels (110) verbunden wird.

14. Verfahren nach Anspruch 13, **dadurch gekennzeichnet, dass** die Impedanz (Z_{D}) der Stromdrossel (160) so eingestellt wird, dass eine in der Glasschmelze (G), insbesondere an Enden von Rührerflügeln, sich ausbildende Wechselstromdichte (I) zwischen einem unteren Grenzwert (Iₘᵢₙ) und einem oberen Grenzwert (Iₘₐₓ) liegt.

15. Verfahren nach Anspruch 14, **dadurch gekennzeichnet, dass** durch den unteren Grenzwert (Iₘᵢₙ) eine minimal erforderliche Wechselstromdichte angegeben wird, mit der an der Innenwandung des Tiegels (110) ein ausreichender Gleichstrompuffer ausgebildet wird, welcher Wasserzersetzungsreaktionen mit Blasenbildung verhindert, und dass durch den oberen Grenzwert (Iₘₐₓ) eine maximal zulässige Wechselstromdichte angegeben wird, oberhalb derer sich in der Glasschmelze (G) Blasen, insbesondere an Rührerflügelenden und/oder im Bereich der Stromanschlusselemente, ausbilden.

16. Verfahren nach einem der Ansprüche 13-15, **dadurch gekennzeichnet, dass** die Stromdrossel (160) mit dem Tiegel (110) alternativ zu dem Kontakt über das Stromanschlusselement (112) über ein Kontaktanschlusselement, insbesondere einen Kontaktierungsflansch (113), kontaktiert wird.

17. Verfahren nach einem der Ansprüche 13-16, **dadurch gekennzeichnet, dass** die Impedanz (Z_{D}) der Stromdrossel (160) abhängig von mindestens einem der folgenden Parameter eingestellt wird:
- Frequenz eines von dem Wechselstromaggregat (150) erzeugten Heizstroms;
- Material des Tiegels, insbesondere des Rührtiegels (110) und/oder des Rührorgans (120), und/oder der Stromanschlusselemente (111, 112);
- Geometrie einschließlich Materialdicke des Tiegels, insbesondere des Rührtiegels (110) und/oder des Rührorgans (120), und/oder der Stromanschlusselemente (111, 112);
- Impedanzen der Stromanschlusselemente (111, 112), des Kontaktanschlusselementes (113) und/oder von deren Zuleitungen;
- Art des verwendeten Glases, insbesondere Art und Menge von in der Glasschmelze verwendeten Redox-Elementen.
